# EUROPEAN PATENT SPECIFICATION

(11) **EP 1 277 008 B1**
(45) Date of publication and mention of the grant of the patent: **30.11.2005**
(21) Application number: 01927806.8
(22) Date of filing: 26.03.2001
(51) Int. Cl.: F16L 33/207, F16L 13/14

(54) **FITTING FOR PRESSURE COUPLING FOR PLASTIC PIPES**
FITTING FÜR EINE DRUCKMITTELKUPPLUNG FÜR KUNSTSTOFFROHRE
RACCORD POUR COUPLAGE SOUS PRESSION DE CONDUITE EN PLASTIQUE

(30) Priority: 27.03.2000 IT MI20000637
(43) Date of publication of application: 22.01.2003
(73) Proprietor: Giacomini S.p.A., 28017 S. Maurizio d'Opaglio (NO) (IT)
(72) Inventor: GIACOMINI, Luca, I-28010 Madonna del Sasso (IT)
(74) Representative: Zanella, Ireneo
(86) International application number: PCT/EP2001/003421
(87) International publication number: WO 2001/073330

(56) References cited:
- EP-A- 0 728 979
- EP-A- 0 950 846
- AT-B- 402 095
- DE-A- 19 545 361

## Description

### Background of the invention

The present invention relates to a fitting for pressure coupling, by a contoured-jaw pliers, plastics material pipes, for example of a single-layer, multiple-layer or a composite type, or with a built-in metal liner or sleeve, generally made of aluminium, in particular for heating, sanitary and fluid distributing systems, according to the preamble of Claim 1.

Several embodiments of the above mentioned fittings are already known.

In the fitting shown in the US-A 3.549.180 patent, the fitting body has a threaded end to be coupled to a system part, and a pipe-holder like end, as well as a clamping detent element for a bushing to be pressure coupled, said bushing forming, with said pipe holder end portion, an annular chamber housing the end portion of the plastics material pipe to be coupled. A contoured gasket which can be fitted on the holder pipe end portion and pushed against the bottom of the bushing is moreover provided. Such a fitting does not allow to visually detect the abutting portion between the end of the plastics pipe fitted on the pipe holder end, and the gasket, respectively the bottom of the pressing bushing to be pressure coupled. Furthermore neither the fitting body nor the pressing bushing is provided with a bearing or geometric engagement abutment for the pressing pliers, which would be necessary to allow the pliers to be repeatedly arranged on the bushing.

The document DE 44 41 373 C2, and its corresponding document EP 0 713 042 B1, discloses a fitting in which on the side of the shoulder (12) facing the tube holder end (14) is provided a projecting portion (16), having a coaxial annular slot (18) in which is engaged the end of the plastics pipe to be coupled, as well as two opposite radially extending openings (16) leading to said annular slot (18) to visually monitor the position of the fitted plastic pipe end, even after the application of the pressing pliers, or during the pressing operation.

Said projecting portion (16) forms likewise an annular abutment thereagainst is axially located a side of the pliers before the pressing operation. Actually, before the pressing operation, a bushing is fitted on the end of the plastic pipe, and then said bushing is fitted on the pipe holder end and finally abutted against said shoulder. Then the pliers is abutted against the projecting portion (16) and, after having performed a visual monitoring of the plastics pipe end in the slot (18), the pliers is closed for performing the pressing operation.

As the pliers is not coupled by a geometric type of engagement, it is subjected to undesired oblique offsets away from the abutment portion 16. To achieve the main object of this document, the operator can visually check the position of the plastics pipe end even during the pressing operation. Since the applied pliers conceals the bushing, which is fully free, a monitoring of a proper position of the bushing, or a possible displacement thereof, can be visually performed by the operator only after the pressing operation.

Thus, the above drawbacks could cause a defective coupling.

Moreover, in this document, a projecting shoulder portion having the visual inspection radial cavities and the axial slot for housing therein the pipe end, can also be formed separated from the shoulder (12) of the fitting, in which this separated portion, as taught in this document, has a ring-like shape for bearing thereagainst said pliers, and having the projecting portion (16) and slot (18) facing the pipe holder end (14).

This document, however, does not teach a manner for clamping the mentioned ring portion to the fitting body. In each case, this document discloses an essential aim that the plastics material pipe end must be seen even during the pressing operation, i.e. with an applied pliers. However, since the pliers is not geometrically restrained and no firm location of the pressing bushing is provided, even with an active control of the position of the plastics pipe and of the pressing operation, such a pressing operation occur on offset bushings and a slanted pliers, thereby leading to a faulty pressure coupling.

The document DE 43 04 680 Cl, and its corresponding document EP 0 611 911 B1, disclose a fitting for overcoming the above mentioned drawbacks, by providing a clear plastics supporting ring for engagement on the fitting body and housing in turn, by a snap type of engagement, the pressing bushing. However, also in this document, no engagement means is provided for geometrically engaging the pliers which, as in the preceding document, is merely axially abutted against said plastics ring. Moreover, the end portions of the pressing bushing are differently shaped, and, accordingly, do not allow an automated assembling. Thus, the assembling time is comparatively long with a substantial increase of the making cost.

The Austrian Patent Application No. 98890144.3 discloses a fitting having a clear plastics material support ring the cross section of which is formed by two adjoining ring elements having different diameters and substantially rectangular cross sections, connected by a radial wall, the less diameter ring having an inner rib for a snap type of engagement in a corresponding annular slot on the fitting shoulder. The larger diameter ring, in turn, has an inner slot for snap engaging therein a contoured end of the pressing bushing, the greater diameter ring forming a geometric coupling ring element for engagement in a slot of the pressing pliers.

From the drawing of this document it should be apparent that, after having applied the pliers, it would be possible to visually monitor the position of the plastics pipe end. The pressing bushing having differently shaped end portions, also has the disadvantage of preventing a quick automated assembling, as above mentioned. Moreover, the plastics ring has an inner annular flange for providing an electric insulation, which, however, requires an additional machining phase on the fitting body.

The German Patent Application No. 94 24555 discloses a fitting like that disclosed in the Austrian Patent Application No. 98890144.3, in which the inner annular flange of the bushing support plastics ring has been removed, and the fitting is formed with an oblique wall for partially bearing thereon the pipe end, while preventing any metal contact between the fitting and metal liner or sleeve of a composite plastics material pipe. Such an approach requires, however, an additional machining phase of the fitting. Also in this document, the pressing bushing has differently contoured end portions, thereby, in addition to a larger time for making the bushings, said bushings prevent the assembling of the fitting to be automated, since a comparatively long time is required for providing the necessary pre-orientation of the bushings.

Moreover, the above mentioned plastics support rings can cause the bushing to disengage from the plastics rings under a comparatively small axial force. The snap engagement of the plastics rings and bushings, furthermore, prevents cross displacements of the bushings, thereby requiring a precise engagement of the plastic pipe end on the pipe holder end, with a consequent increase of the plastic pipe assembling time.

Since, during the pressing operation, the end of the bushing engaged in the plastics ring is spread apart as a trumpet, this would also affect the plastics ring which can be frequently broken.

Thus, it would be desirable to overcome the above mentioned drawbacks.

### Summary of the invention

Accordingly, the main object of the present invention is to provide a fitting, of the above indicated type, overcoming the drawbacks of prior fittings, and having a very strong construction and including components which are substantially mutually axially locked, while allowing a quick assembling of the support to be performed in a fully automated manner.

Another object of the present invention is to provide pressing bushings operating as locking elements for locking the plastics pipe upon fitting thereof, to make the requirement of visually monitoring the position of the plastics pipe even during the pressing operation superfluous.

The above mentioned objects are achieved, according to the invention, by a fitting of the above indicated type, having the features of Claim 1.

Further advantageous embodiments and configurations of the inventive fitting are defined in the dependent claims.

The fitting according to the invention provides several advantages.

At first, it is supplied to the installing operators in a ready for use preassembled condition, and with a very mechanically stable construction. Accordingly, it safely resists against the often roughly use with heavy pliers in installing heating, sanitary and the like system. The support ring made of a metal material, preferably of an annealed brass material, safely prevents breakages frequently occurring in plastics rings. In an embodiment, the pressing bushing can be cross driven within a broad range, thereby greatly facilitating a quick mating of the plastics pipe in its fitting, the position of which can be easily monitored through openings formed through the support ring and facing the fitting shoulder. The pliers locating metal collar allows the pliers to be located by a quick and accurate geometric type of engagement even in a case of a roughly handling of the pliers. The provision of a pressing bushing having like contoured end portions, i.e. a symmetrical bushing, allows the three components of the fitting to be fully automatically quickly assembled, since no pre-orientation of the bushing to be engaged in the support ring is necessary. The support metal ring can be made by automatic machines with few processing steps, i.e. in a short time. The locking of the bushing in the support ring is performed by slightly deforming some circumferential points, for example four points cross arranged on the support ring, thereby the bushing can be axially locked but transversely displaced in a comparatively broad range which, together with the outside tapering of the bushing end, facilitates the coupling, preferably of an interference type, of the plastics pipe. As the inner diameter of the bushing substantially corresponds to the outer diameter of the plastics pipe it will cause, during the mating of the plastic pipe on the holder pipe end, a safe deformation of the provided O-rings, with a consequent firm locking of the pipe end fitted on the pipe holder end portion, thereby assuring a substantial locking of the plastics pipe also during the pressing operation. A cylindrical configuration of the larger collar of the support ring allows the pressing bushing to be simply and quickly slidingly engaged with a set clearance, the axial point-deformation locking of the bushing being advantageously performed as the fitting is assembled.

In a further embodiment of the fitting, in which the smaller collar has a frustum of cone shape, a very strong engagement of the tooth end portions in a corresponding slot of the fitting is obtained, without requiring any corresponding counter-contoured teeth is obtained, thereby further reducing the making time.

### Brief description of the drawings

Further characteristics, advantages and details of the fitting according to the present invention will become more apparent from the following disclosure, with reference to the accompanying drawings, schematically illustrating two preferred embodiments thereof, and in which:
Figure 1 shows a first embodiment of the fitting according to the invention, by a half longitudinal cross section and a half exposed view, the pressing pliers being also partially shown;
Figure 2 is a perspective view of the support ring of Figure 1;
Figure 3 is a top plan view of the support ring of Figure 2;
Figure 4 is a cross-sectional view substantially taken along the section line IV-IV of Figure 3;
Figure 5 shows the detail A of Figure 4 on an enlarged scale;
Figure 6 is a bottom view of the support ring of Figure 2;
Figure 7 is a side elevation view of the support ring of Figure 2;
Figure 8 is a cross-sectional view substantially taken along the section line VIII- VTII of Figure 6;
Figure 9 shows the detail B of Figure 8 on an enlarged scale;
Figure 10 shows a modified embodiment of the insulating gasket of the fitting;
Figure 11 is a longitudinal cross section of a second embodiment of the fitting according to the invention, the pressing pliers being also partially shown;
Figure 12 is a perspective view of the support ring of Figure 11;
Figure 13 is a bottom view of the support ring of Figure 12;
Figure 14 is a side elevation view of the support ring of figure 12;
Figure 15 is a top plan view of the support ring of Figure 12;
Figure 16 is a perspective view of the support ring of Figure 12 taken from the bottom side;
Figure 17 is a cross-sectional view substantially taken along the section line XVI - XVI of Figure 13, and
Figure 18 shows the detail C of Figure 17 on an enlarged scale.

### Description of the preferred embodiments

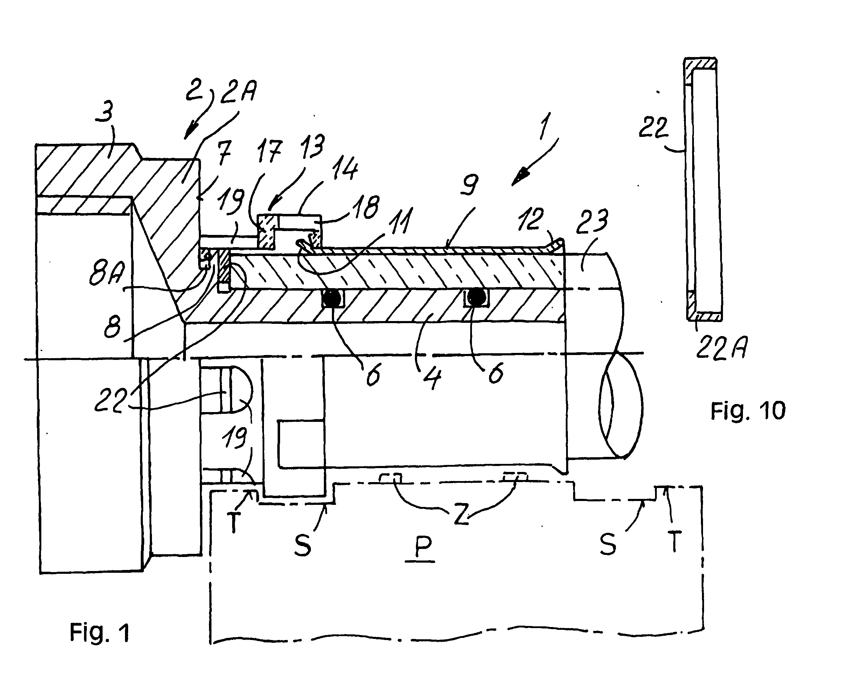

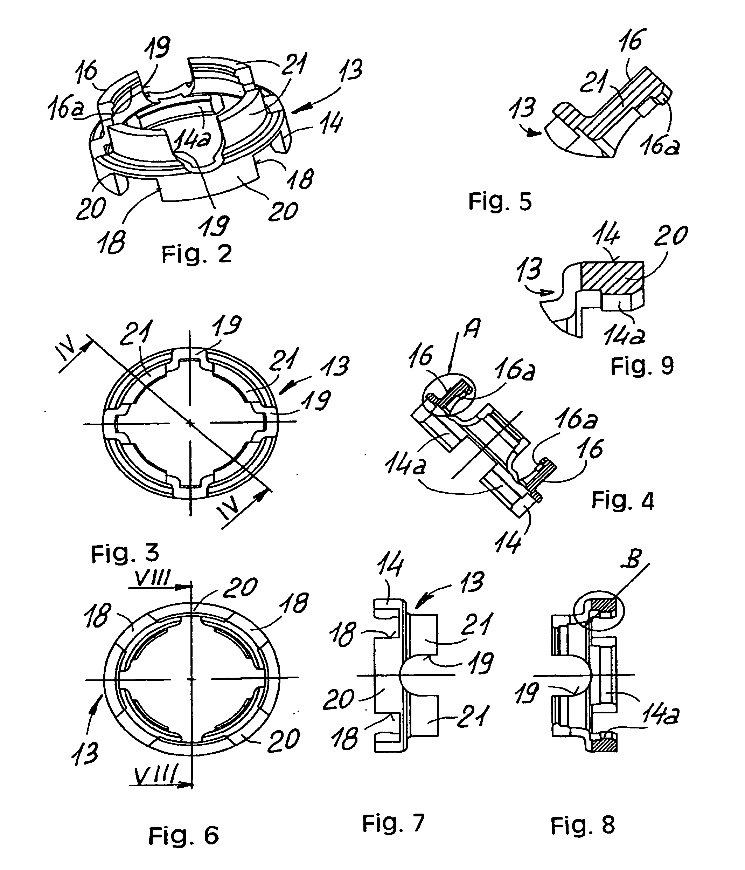

Reference will be at first made to Figures 1 to 10 showing a first embodiment of the invention. The fitting has been generally indicated by 1 and has a support body 2 including a shoulder 2A, a female threaded end 3, as illustrated, or a male threaded end, for coupling a part of a heating or sanitary system, not shown, and a pipe holder end 4.This pipe holder end 4 can have any suitable contour and, in the illustrated embodiment, houses therein two O-rings 6. The number 7 shows a front wall of the shoulder 2A and the number 8 shows an annular rib defining, with the front wall 7A, a latching or locking slot or groove 8A. The number 9 shows a metal bushing to be pressed, or pressing bushing, the ends 11, 12 of which are likewise contoured, i.e. they are outward tapering. The number 13 shows a metal support ring, preferably made of brass, having two annular collars 14, 16 of different diameters and coupled as a single piece with a circumferential flange wall 17. As clearly shown in Figures 5 and 9, the outer ends of the annular collars 14, 16 have a hook tapering annular contour 14A, 16A. Figure 2 shows that both collars 14, 16 have a plurality of substantially U-shaped openings 18, 19, which are outward open. In the shown embodiment, the U-shaped openings 19 of the collar 16 are respectively opposite to a solid region between the adjoining openings 18 of the opposite collar 14 or vice-versa.

Depending on the width and size of the openings 18, 19, could be made said solid regions or teeth 20, 21, in the form of a circle sector having an elasticity which is a function of the length of said teeth, of their thicknesses and contours. Actually, by providing four openings 18, 19 cross arranged in each collar 14, 16 an optimum elasticity facilitating a very quick, reliable, firm and stake assembling of the components 2, 9 and 13, has been obtained. In assembling said components, the annular contours 16A operatively engage the annular lug 8 of the shoulder 2, whereas the annular contours 14A operatively engage one of the two contoured ends 11, 12 of the bushing 9.

The number 22 shows an insulating gasket, which can be fitted with a clearance on the pipe holder end 4 toward and against said annular lug 8.

As is shown in Figure 1, the openings 19 of the collar 16 have a large size allowing to easily and quickly see the position of the end of the plastic pipe 3 to be abutted against the insulating washer 22 bearing on the annular lug 8 (or directly on the annular lug 8 in the case of plastics material single-layer or multiple-layer pipes) before applying the pliers for pressing the bushing 9.

As shown by the dash-dot line in Figure 1, the larger diameter collar 14 provides a geometric engagement coupling collar for coupling with a corresponding slot 6 formed in the jaws of the pliers P, the end T of the pliers circumferentially covering the openings 19 in the collar 16 in engagement with the shoulder 2A. The pliers P has a symmetrical construction, with two slots S to be applied either from a side or the other. The letter Z shows two known circumferential pressing ribs, the position of which depend on the positions of the O-rings 6.

By providing the metal support ring 13, the components 2, 13, 9 can be automatically assembled with a quick sequence of coaxial movements, in which, at first, on the pipe holder end 4 are engaged the insulating washer 22 then the support ring 13 and finally the symmetric bushing 9, wherein, during the feeding of the support ring 13 and bushing 9 to an end of stroke position, a geometric push coupling will be obtained, while providing the above mentioned snap engagements of the support ring 13 on the shoulder 2 and bushing 9 in said support ring 13.

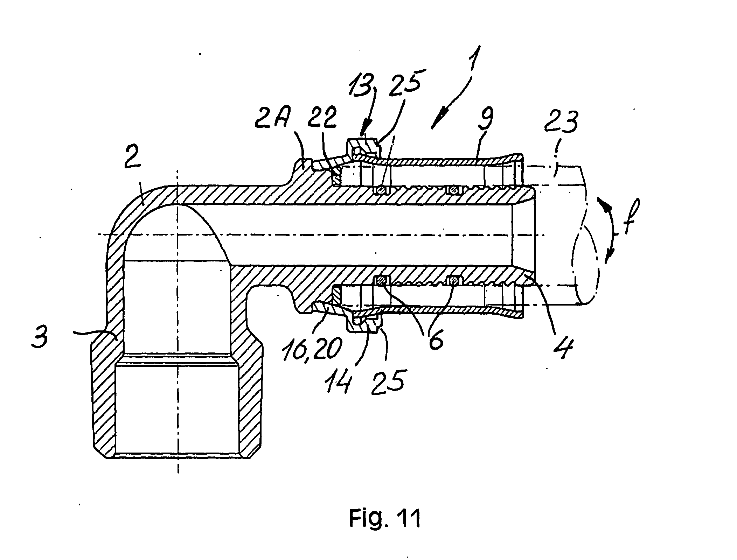

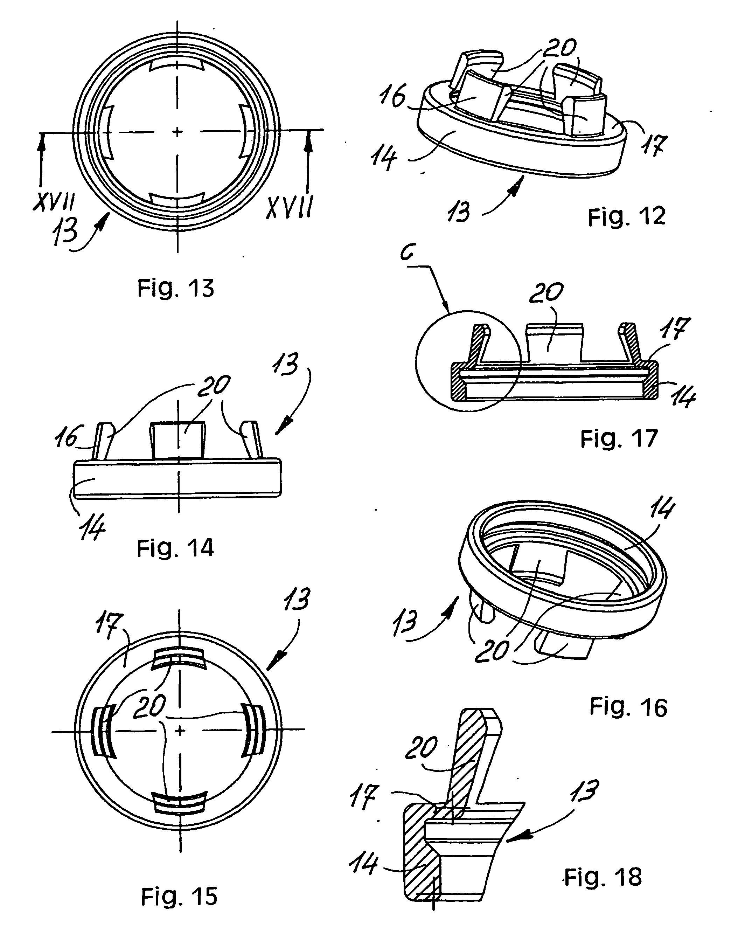

Reference will be now made to Figures 11-18 illustrating a second embodiment of the fitting according to the invention.

In this modified embodiment, which can be made in a manner much more simple and quicker than the first embodiment, the support ring 13 has the larger diameter collar 14 in the form of a cylindrical sleeve or liner, i.e. without openings, whereas the smaller collar 16 differentiates from the first embodiment since it has a frustum of cone shape tapering towards the shoulder 2A of the fitting body 2. Moreover, differently from the first embodiment, in this second embodiment, both collars 14, 16 do not have contoured front end portions, but a practically smooth construction. The axial locking of the bushing 9 is achieved, preferably during the assembling operation, by circumferentially distributed point deformations 25, in this example four cross-arranged point deformations 25.

While preventing an axial displacement of the bushing 9, said point deformations 25 allow the bushing 9 to substantially radially move, as shown by the arrow f in Figure 11.

The teeth 20 forming the smaller collar 16 are trapezium shaped. This feature, which can also be used in the first embodiment, allows to better see the end of the fitted plastics pipe 23 and increases the elasticity of the teeth 20.

With a suitable set projection of the O-rings 6 according to the invention, the inner diameter of the bushing 9 is chosen substantially equal to the outer diameter of the plastic pipe 23, shown with dash-dot lines in Figure 11, thereby providing an interference type of coupling with the pipe 23 which, upon fitting, will be substantially locked on the pipe holder end 4 and, through the bushing 9, in the gap between said bushing 9 and the pipe holder end 4. Thus, the bushing 9 forms a blocking element for locking the plastics pipe 23 in abutment against the insulating washer 22. Accordingly, a proper abutment of the pipe 23 against the washer 22, as detected before the pressing operation, i.e. before applying the pliers P, is safely maintained even after the application of the pliers and the pressing operation. Consequently, an active monitoring of the position of the end of the pipe 23 even during the pressing would be superfluous. The pipe 23 making tolerances would be compensated for by the elasticity of the O-rings 6 which suitably projecting from the outer diameter of the pipe holder end 4.

By providing a gasket 22 having a substantially L-shape cross section, as shown in Figure 10, and made of a clear insulating material, the leg 22A can substantially close from inside the openings 19 of the collar 16. This prevents electrically conductive liquid drops or dirt particles from forming short circuits between the fitting body 2 and metal liner provided in a composite pipe 23. Said L-cross section gasket 22, on the other hand, does not have any supporting function.

From the above constructional and operational disclosure, it should be apparent that the fittings according to the present invention efficiently achieve the mentioned objects, while overcoming all the disadvantages of the prior art and achieving the above mentioned advantages.

Of course, the above disclosure related to fittings to be fixed to a component of a sanitary, heating or fluid distributing system could also be applied to double fittings, i.e. having a fitting body with two axially opposite pipe holder ends, optionally of different diameters, as well as to T-shaped and the like fittings, without departing from the scope of the invention.

## Claims

1. A fitting for pressure coupling, by a contoured jaw pliers, plastics material pipes, such as plastic single-layer, multiple-layer or composite type pipes, or having a built-in metal liner, in particular for heating, sanitary and fluid distributing systems, said fitting comprising:
a) a fitting body with
a threaded end for coupling to a part of the heating, sanitary or fluid distributing system,
- an opposite pipe holder end, and
- a middle detent shoulder for said plastics pipe fitted on the pipe holder end,
b) a metal pressing bushing, forming with said pipe holder end an annular chamber for housing therein the end of the plastics pipe to be coupled to the fitting, and
c) a support ring adapted to engage, at one end, on said shoulder and support, at the other end, said pressing bushing, wherein said support ring allows to visually monitor the position of the plastics pipe end at the shoulder region, before applying the pliers,
**characterized in that**
i) the support ring (13) is made of a metal material and comprises two adjoining collars (14, 16) of different diameters and coupled to one another by an annular radial flange wall (17),
ii) at least the collar (16) on the shoulder side (2A) is provided with substantially U-shape circumferential openings (19) open toward said shoulder (2A) and forming therebetween tooth sectors (21) having at least limited elastic properties,
iii) said circumferential opening (19) on the shoulder (2A) side being formed to allow the plastics pipe (23) end at said shoulder region (2A, 7) to be seen as said clamping pliers (P) is not applied, whereas, as said clamping pliers (P) is applied, i.e. in a pressing operation, said circumferential openings (19) are covered by the body of the pliers (P),
iv) wherein an electrically insulating material washer (22) fitted on said pipe holder end (4) and separating the end of the plastics pipe (23) from the shoulder (2A, 7) of the fitting (1) is provided, and
v) said pressing bushing (9) has a symmetrical configuration with like ends (11, 12), outward and upward tapering.

2. A fitting according to Claim 1, **characterized in that** both said collars (14, 16) forming said support ring (13) have outward facing circumferential openings (18, 19) of substantially U-shape.

3. A fitting according to Claim 1, **characterized in that** in said support ring (13), said shoulder side (2A) collar (16) has an outward tapering frustum of cone configuration, whereas said pressing bushing (9) side collar (14) has a cylindric liner configuration.

4. A fitting according to Claim 1, **characterized in that** said circumferential openings (19) comprise four cross-arranged openings, the length of said openings being preferably larger than the length of said teeth (21) formed between said openings (19).

5. A fitting according to Claim 1, **characterized in that** said shoulder (2A) is provided, on a side (7) thereof facing said pipe holding end (4) with a slot (8A) for engaging therein the ends of said support teeth (21) formed on said collar (16) of said support ring (13).

6. A fitting according to Claims 2 and 5, **characterized in that** the ends of said support teeth (21) have a hook-shape contour (16A) for engaging with said shoulder groove (8A).

7. A fitting according to Claims 1 and 3, **characterized in that** said bushing (9) is axially locked, but can be limitatedly displaced in a radial direction, by point deformations (25) of the cylindrical liner collar (14), for example four cross arranged point deformations (25).

8. A fitting according to Claim 3, **characterized in that** the inner ends of the teeth (21) of the frustum of cone collar (16) are of smooth construction.

9. A fitting according to Claim 1, **characterized in that** the O-rings (6) engaged in grooves of the pipe holder end (4) project therefrom and that the pressing bushing (9) has an inner diameter allowing said plastics pipe (23) to be coupled by interference on the pipe holder end (4) in abutment against said shoulder (2A, 7).

10. A fitting according to Claim 1 and one or more of the following claims, **characterized in that** said fitting comprises, on the two sides of a middle shoulder, a respectively pipe holder end, said pipe holder ends being axially opposite and optionally having different diameters, or a T or the like shape body.

## Patentansprüche

1. Fitting für eine Druckverbindung von Rohren: aus Kunststoffmaterial mittels einer konturierten Zange, wie z. B. einschichtige Rohre, mehrschichtige Rohre oder Verbundrohre oder Rohre mit einem integrierten Metalleinsatz, insbesondere für Heizsysteme, Sanitärsysteme und Flüssigkeitsverteilungssysteme, wobei das Fitting Folgendes aufweist:
a) einen Fitting-Grundkörper mit
einem mit einem Gewinde versehenen Ende für eine Verbindung mit einem Teil des Heizsystems, Sanitärsystems oder Flüssigkeitsverteilungssystems,
- einem gegenüberliegenden Rohrhalterende, und
- einer mittleren Anschlagschulter für das auf dem Rohrhalterende angebrachte Kunststoffrohr,
b) eine Presshülse aus Metall, die mit dem Rohrhalterende eine ringförmige Kammer zur Aufnahme des Endes des mit dem Fitting zu verbindenden Kunststoffrohrs bildet, und
c) einen Stützring, der ausgebildet ist, um an einem Ende an der Schulter anzugreifen und an dem anderen Ende die Presshülse zu stützen, wobei der Stützring es erlaubt die Position des Endes des Kunststoffrohrs im Bereich der Schulter visuell zu überwachen, bevor die Zange angewendet wird,
**dadurch gekennzeichnet, dass**
i) der Stützring (13) aus einem Metallmaterial hergestellt ist und zwei benachbarte Kragen (14, 16) mit unterschiedlichen Durchmessern aufweist, die über eine ringförmige, radiale Flanschwandung (17) miteinander verbunden sind,
ii) mindestens der Kragen (16) an der Schulterseite (2A) mit im Wesentlichen U-förmigen Umfangsöffnungen (19) versehen ist, die in Richtung der Schulter (2A) geöffnet sind und dazwischen Zahnsektoren (21) ausbilden, die mindestens eingeschränkte elastische Eigenschaften besitzen,
iii) die Umfangsöffnung (19) an der Seite der Schulter (2A) so ausgebildet ist, dass sie es ermöglicht, das Ende des Kunststoffrohrs (23) in dem Schulterbereich (2A, 7) zu sehen, wenn die Presszange (P) nicht angewendet wird, während die Umfangsöffnungen (19) beim Anwenden der Presszange (P), d. h. bei einem Pressvorgang, von dem Grundkörper der Zange (P) abgedeckt werden,
iv) wobei ein Ring (22) aus einem elektrisch isolierenden Material vorgesehen ist, der auf dem Rohrhalterende (4) sitzt und das Ende des Kunststoffrohrs (23) von der Schulter (2A, 7) des Fittings (1) trennt, und
v) die Presshülse (9) eine symmetrische Gestalt mit gleichen Enden (11, 12) besitzt, die nach außen und nach oben konisch verlaufen.

2. Fitting nach Anspruch 1, **dadurch gekennzeichnet, dass** beide Kragen (14, 16), die den Stützring (13) bilden, nach außen gerichtete Umfangsöffnungen (18, 19) aufweisen, die im Wesentlichen U-förmig sind.

3. Fitting nach Anspruch 1, **dadurch gekennzeichnet, dass** der Kragen (16) an der Schulterseite (2A) in dem Stützring (13) eine nach außen konisch verlaufende kegelstumpfförmige Gestalt besitzt, während der Kragen (14) an der Seite der Presshülse (9) die Gestalt eines zylindrischen Einsatzes besitzt.

4. Fitting nach Anspruch 1, **dadurch gekennzeichnet, dass** die Umfangsöffnungen (19) vier kreuzweise angeordnete Öffnungen aufweisen, wobei die Länge der Öffnungen vorzugsweise größer als die Länge der Zähne (21) ist, die zwischen den Öffnungen (19) gebildet sind.

5. Fitting nach Anspruch 1, **dadurch gekennzeichnet, dass** die Schulter (2A) an ihrer dem Rohrhalterende (4) zugewandten Seite (7) einen Schlitz (8A) zum Eingriff der Enden der Stützzähne (21) darin aufweist, wobei die Stützzähne (21) an dem Kragen (16) des Stützrings (13) gebildet sind.

6. Fitting nach den Ansprüchen 2 und 5, **dadurch gekennzeichnet, dass** die Enden der Stützzähne (21) eine hakenförmige Gestalt (16A) zum Eingriff in die Nut (8A) besitzen.

7. Fitting nach den Ansprüchen 1 und 3, **dadurch gekennzeichnet, dass** die Hülse (9) axial mittels punktförmiger Verformungen (25) des Kragens (14) mit zylindrischem Einsatz, beispielsweise vier kreuzweise angeordneten punktförmigen Verformungen (25), festgesetzt ist, aber eingeschränkt in radialer Richtung bewegt werden kann.

8. Fitting nach Anspruch 3, **dadurch gekennzeichnet, dass** die inneren Enden der Zähne (21) des Kragens (16) mit kegelstumpfförmiger Gestalt eine glatte Gestaltung besitzen.

9. Fitting nach Anspruch 1, **dadurch gekennzeichnet, dass** die O-Ringe (6), die in Nuten des Rohrhalterendes (4) eingreifen, sich davon weg erstrecken und dass die Presshülse (9) einen inneren Durchmesser besitzt, der es ermöglicht, das Plastikrohr (23) mittels einer Pressung auf dem Rohrhalterende (4) anstoßend an die Schulter (2A, 7) festzusetzen.

10. Fitting nach Anspruch 1 und einem oder mehreren der vorangegangenen Ansprüche, **dadurch gekennzeichnet, dass** das Fitting an den beiden Seiten einer mittleren Schulter ein entsprechendes Rohrhalterende aufweist, wobei die Rohrhalterenden axial entgegengesetzt angeordnet sind und optional unterschiedliche Durchmesser besitzen oder eine T-förmige oder ähnliche Gestalt aufweisen.

## Revendications

1. Raccord pour couplage sous pression, par une passe à mâchoires adaptées, de conduites en matériau plastique, comme des conduites plastiques du type à couche unique, à couches multiples ou composites, ou comportant un revêtement métallique intégré, en particulier pour des systèmes de chauffage, sanitaires et de distribution de fluide, ledit raccord comprenant :
a) un corps de raccord avec
une extrémité filetée pour le couplage à une pièce d'un système de chauffage, sanitaire ou de distribution de fluide,
- une extrémité de retenue de conduite opposée et
- un épaulement de positionnement médian pour ladite conduite plastique monté sur l'extrémité de retenue de conduite,
b) une douille de pression métallique, formant avec ladite extrémité de retenue de conduite une chambre annulaire pour loger dans celle-ci l'extrémité de la conduite plastique à coupler au raccord et
c) une bague de support apte à venir en prise, à une extrémité, avec ledit épaulement et à supporter, à l'autre extrémité, ladite douille de pression, où ladite bague de support permet de surveiller visuellement la position de l'extrémité de conduite plastique à la région d'épaulement, avant d'appliquer la pince,
**caractérisée en ce que**
i) la bague de support (13) est réalisée en un matériau métallique et comprend deux colliers adjacents (14, 16) de diamètres différents et couplés l'un à l'autre par une paroi de bride radiale annulaire (17),
ii) au moins le collier (16) au côté de l'épaulement (2A) présente des ouvertures circonférentielles (19) sensiblement en forme de U ouvertes vers ledit épaulement (2A) et formant entre elles des secteurs dentés (21) ayant au moins des propriétés élastiques limitées,
iii) ladite ouverture circonférentielle (19) au côté de l'épaulement (2A) étant formée pour permettre de voir l'extrémité de la conduite plastique (23) à ladite région d'épaulement (2A, 7) pendant que la pince de serrage (P) n'est pas appliquée, tandis que, lorsque ladite pince de serrage (P) est appliquée, c'est-à-dire lors d'une opération de pressage, lesdites ouvertures circonférentielles (19) sont recouvertes par le corps de la pince (P),
iv) où une rondelle (22) en un matériau électriquement isolant montée sur ladite extrémité de retenue de conduite (4) et séparant l'extrémité de la conduite plastique (23) de l'épaulement (2A, 7) du raccord (1) est réalisée, et
v) ladite douille de pression (9) possède une configuration symétrique, avec des extrémités similaires (11, 12), s'étendant vers l'extérieur et vers le haut.

2. Raccord selon la revendication 1, **caractérisé en ce que** les deux colliers (14, 16) formant ladite bague de support (13) possèdent des ouvertures circonférentielles (18, 19) orientées vers l'extérieur d'une forme sensiblement en U.

3. Raccord selon la revendication 1, **caractérisé en ce que** dans ladite bague de support (13), ledit collier (16) côté épaulement (2A) possède une configuration tronconique vers l'extérieur, tandis que ledit collier (14) côté douille de pression (9) a une configuration cylindrique linéaire.

4. Raccord selon la revendication 1, **caractérisé en ce que** lesdites ouvertures circonférentielles (19) comprennent quatre ouvertures agencées en croix, la longueur desdites ouvertures étant de préférence plus grande que la longueur desdites dents (21) formées entre lesdites ouvertures (19).

5. Raccord selon la revendication 1, **caractérisé en ce que** ledit épaulement (2A) présente, sur son côté (7) orienté vers ladite extrémité de retenue de conduite (4) une fente (8A) pour engager dans celle-ci les extrémités desdites dents de support (21) formées sur ledit collier (16) de ladite bague de support (13).

6. Raccord selon les revendications 2 et 5, **caractérisé en ce que** les extrémités desdites dents de support (21) ont un contour en forme de crochet (16A) pour s'engager dans ladite rainure d'épaulement (8A).

7. Raccord selon les revendications 1 et 3, **caractérisé en ce que** ladite douille (9) est verrouillée axialement, mais peut être déplacée dans des limites dans une direction radiale, par des déformations ponctuelles (25) du collier de revêtement cylindrique (14), par exemple quatre déformations en point agencées en croix.

8. Raccord selon la revendication 3, **caractérisé en ce que** les extrémités intérieures des dents (21) du collier tronconique (16) sont d'une construction lisse.

9. Raccord selon la revendication 1, **caractérisé en ce que** les joints toriques (6) engagés dans les rainures de l'extrémité de retenue de conduite (4) font saillie de celle-ci, et **en ce que** la douille de pression (9) a un diamètre intérieur permettant que ladite conduite plastique (21) soit couplée par ajustement serré à l'extrémité de retenue de conduite (4) en butée contre ledit épaulement (2A, 7).

10. Raccord selon la revendication 1 et l'une ou plusieurs des revendications suivantes, **caractérisé en ce que** ledit raccord comprend, sur les deux côtés d'un épaulement médian, une extrémité de retenue de conduite respective, lesdites extrémités de retenue de conduite étant axialement opposées et ayant, en option, des diamètres différents, ou un corps en forme de T ou analogue.
